# EUROPEAN PATENT SPECIFICATION

(11) **EP 0 382 237 B1**
(45) Date of publication and mention of the grant of the patent: **29.12.1997**
(21) Application number: 90102572.6
(22) Date of filing: 09.02.1990
(51) Int. Cl.: G06F 12/10

(54) **Multiprocessing system having a single translation lookaside buffer with reduced processor overhead and operating method therefor**
Mehrfachverarbeitungsanordnung mit einem einzigen Adressenübersetzungspufferspeicher mit vermindertem Prozessorzusatzaufwand und Verfahren zum Betrieb einer solchen Anordnung
Système de multitraitement avec mémoire tampon unique de traduction d'adresses à temps système de processeur réduit et procédé de fonctionnement d'un tel système

(30) Priority: 10.02.1989 JP 32294/89
(43) Date of publication of application: 16.08.1990
(73) Proprietor: NEC CORPORATION, Tokyo (JP)
(72) Inventor: Kadaira, Gizo, c/o NEC CORPORATION, Minato-ku, Tokyo (JP)
(74) Representative: VOSSIUS & PARTNER

(56) References cited:
- EP-A- 0 282 213
- US-A- 4 376 297
- US-A- 4 481 573
- IBM TECHNICAL DISCLOSURE BULLETIN. vol. 25, no. 11B, April 1983, NEW YORK US, pages 5960 - 5961; WEISS ET AL: 'SHARED CACHE IN A CHECKPOINT ENVIRONMENT.'

## Description

The present invention relates generally to multiprocessor systems, and more specifically to address translation technique for multiprocessor systems.

Supercomputers are increasingly used for high-speed calculations in many scientific and industrial applications. To meet the high-speed requirement, multi-processing systems have been developed to process multiple jobs and tasks in a parallel mode. In many of such applications, the amount of data to be processed exceeds the capacity of main memory of the system, and therefore, a technique known as "virtual memory" is usually employed for virtually expanding the storage area of main memory by creating an extended area in a mass storage system such as hard disks. With this technique, logical memory addresses in a program are translated to physical memory addresses on a per page basis using address translation tables stored in main memory before it is accessed by each processor. To reduce the access time, a high-speed, translation lookaside buffer is provided, and each processor loads its identification number and a copy of the address table into the buffer. As a result, in a multitasking mode, processors load address translation tables into the buffer when they attempt to access the same pages and therefore processor overhead for address mapping increases. One solution to this problem would be the use of a technique by which all address translation tables that correspond to a segmented virtual space are simultaneously loaded as disclosed in US-A-4,481,573. However, as discussed in this patent, as many translation lookaside buffers must be provided as there are processors, resulting in an increase in hardware cost.

US-A-4 376 297 describes a literal memory addressing device wherein virtual addresses are translated into real addresses by storing a limited number of real addresses in a partitioned translation lookaside buffer (TLB) in which each partition is associated with a recently active user process. When the central processor returns control to a previously active user process, means are employed for first searching for and then verifying the validity of prior address translation data stored in that TLB partition associated with the reactivated process.

It is therefore an object of the present invention to provide a multiprocessor system having a single translation lookaside buffer while reducing processor overhead to allow it to be used efficiently by the processors.

According to a first aspect of the present invention, there is provided a multiprocessing system having a master processor and a plurality of slave processors and a main memory connected to the processors, the main memory having a plurality of paged address translation tables stored respectively in logical memory spaces, each of the tables describing a relationship between a logical address and a physical address. From a requesting processor, the system receives instructions containing a segmented virtual space identifier and a shared-access or nonshared-access identifier bit. A single translation lookaside buffer is provided which is partitioned into a plurality of buffer areas. Directory registers are provided respectively corresponding to the buffer areas, each of the registers being partitioned into a first field and a second field having bit positions respectively assigned to the processors. A directory controller is provided for selecting a directory register and writing the segmented virtual space identifier of the requesting processor into the first field of the selected register and a bit "1" into its second field in a position assigned to the requesting processor. The directory controller responds to the nonshared-access identifier to address one of the buffer areas which corresponds to the selected directory register and in response to the shared-access identifier bit searches the directory registers to detect a first register whose first field contains the segmented virtual space identifier of the requesting processor and whose second field contains a bit "1" in a position assigned to the the requesting processor to reset this bit to invalidate the position of this register assigned to the requesting processor. The directory controller further detects a second register whose first field contains the segmented virtual space identifier of the requesting processor and whose second field contains a bit "1" in a position assigned to the master processor to set a bit "1" in its second field in a position assigned to the requesting processor. A table access controller is provided for loading a copy of the paged address translation tables from the main memory into the buffer area addressed by the directory controller. The bits "1" in each of the directory register, indicates the grant of access right. Preferably, the directory controller is responsive to the nonshared-access identifier bit subsequently issued from the requesting processor making a further search through all directory registers to detect the second register and resets one of the bits "1" of its second field which is stored in a position assigned to the requesting processor and a copy of the translation tables is loaded from the main memory into a buffer area corresponding to a directory register containing instructions from the requesting processor.

According to a second aspect the directory controller selects one of the directory registers either in response to the shared- or nonshared-access identifier bit and writes the segmented virtual space identifier of the requesting processor into the first field of the selected directory register and a bit "1" into the second field of the seiected directory register in a position assigned to the requesting processor, and makes a search, in response to the nonshared-access identifier bit, through the directory registers to detect a directory register whose first field contains the segmented virtual space identifier of the requesting processor and whose second field contains bits "1" in positions assigned respectively to the master and requesting processors. One of the bits "1" of the second field of the detected register is reset in a position assigned to the requesting processor. Following the resetting operation, the directory controller addresses one of the buffer areas which corresponds to a directory register whose first field contains the segmented virtual space identifier of the requesting processor and whose second field contains a bit "1" in a position assigned to the requesting processor.

### BRIEF DESCRIPTION OF THE DRAWINGS

The present invention will be described in further detail with reference to the accompanying drawings, in which:
Fig. 1 is a block diagram of a multiprocessor system according to the present invention;
Fig. 2 illustrates the relationship between a logical address and a physical address;
Fig. 3 is a flowchart describing a sequence of instructions executed by the directory controller of Fig. 1;
Fig. 4 is a flowchart describing details of the register selection step of Fig. 3;
Fig. 5 is a flowchart describing a sequence of instructions executed by the table access controller of Fig. 1; and
Fig. 6 illustrates the contents of directory registers.

### DETAILED DESCRIPTION

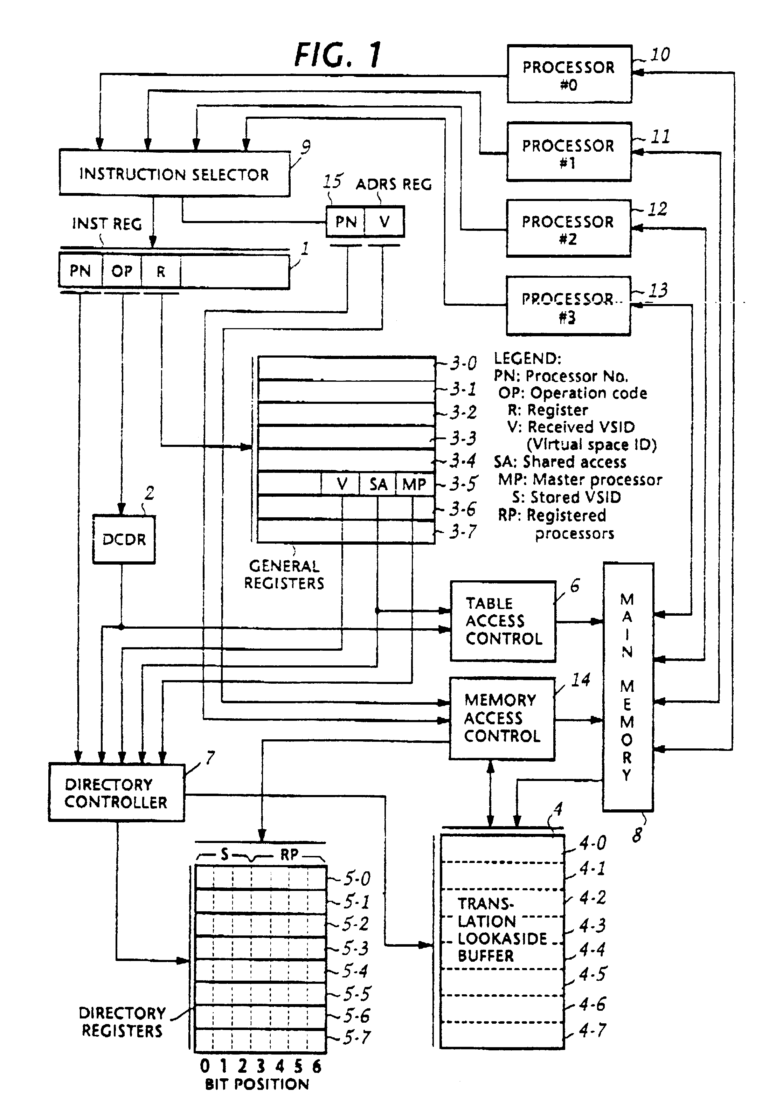

Referring now to Fig. 1, there is shown a multiprocessor system of the present invention. The system comprises an instruction register 1 for storing instructions loaded through one output terminal of instruction selector 9 from processors 10∼13 having processor identifiers PN=00, PN=01, PN=10 and PN=11, respectively. Instruction register 1 contains a processor identifier field PN connected to a directory controller 7, an operation code field OP connected to a decoder 2, and a register identifier field R which specifies one of general registers 3-0∼3-7. Each of the registers 3-0∼3-7 includes a 3-bit segmented virtual space identifier, or VSID field V, a shared-access identification field SA (the setting of bit "1" indicates that access is shared with processor 11 which is assumed to be a master processor), and a master processor identifier field MP. The fields V, SA and MP of general registers 3-0∼3-7 are connected to directory controller 7.

If decoder 2 interprets an operation code from instruction register 1 as a "table load" instruction, it informs this fact to a table access controller 6 as well as to directory controller 7 to which the fields SA of registers 3-0∼3-7 are also applied.

Main memory 8 has a plurality of memory spaces each containing 16 pages of address translation tables. The entries of these memory spaces are sequentially addressed by the table access controller 6 to read out 16 address translation tables at a high speed.

According to this invention, only one translation lookaside buffer 4 is provided which is partitioned into eight buffer areas 4-0∼4-7 each of which is identified by a 3-bit identifier for storing sixteen address translation tables read out of main memory 8.

Directory registers 5-0∼5-7, which are respectively associated with the buffer areas 4-0∼4-7, are connected to directory controller 7. Each directory register is a 7-bit register having a 3-bit stored virtual space identifier field S which occupies #0 to #2 bit positions and a 4-bit registered processor identifier field RP occupying #3 to #6 bit positions. The S field of each directory register 5 is used to store the 3-bit identifier of a segmented virtual space identifier, and the #3 to #6 bit positions of the directory register are respectively assigned to processors #0 to #3. The setting of a bit "1" in these bit positions indicates that the bit-setup processors are allowed to access the translation tables stored in one of the buffer areas 4-0∼4-7 which corresponds to the same directory register. Therefore, if a bit "1" is set in position #5 of register 5-6, processor #2 is allowed to address translation tables stored in buffer area 4-6.

Directory controller 7 provides write and search control on directory registers 5-0∼5-7 in response to a signal from decoder 2. As will be described later, in response to a table load instruction, directory controller 7 selects one of registers 5 having all "0" in bit positions #3 to #6 and having a lowest register number among those having all "0" in the bit positions #3 to #6, and proceeds to read data out of general registers 3 into the S and RP fields of the selected directory register. During a shared-access mode invoked by a given slave processor (one of processors #0, #2 and #3), directory controller 7 searches all the S fields of directory registers 5-0∼5-7 using the V and PN field data to detect those whose data matches the V field data and proceeds to detect one whose RP field matches the PN data so that only one register remains in the screening process. The bit "1" of the RP field of this directory register is then reset to zero. Directory controller 7 makes a further search through all directory registers 5 using the V and MP field data to set a bit "1" into the RP field of the detected register in a position corresponding to the given processor. During a subsequent exclusive-access mode requested by that given processor, directory controller 7 searches all directory registers 5 using the V, MP and PN data in succession to detect only one directory register and resets the bit "1" of the RP field of the detected register stored in the position assigned to the given processor.

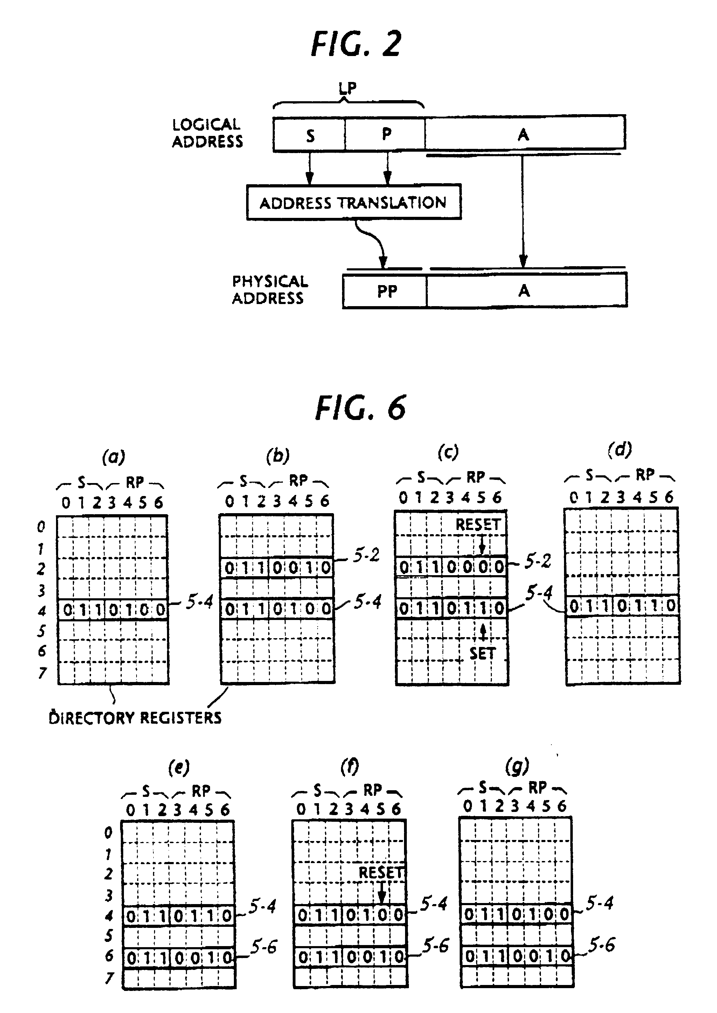

The system further includes a memory access controller 14 and an address register 15 which is connected to a second output terminal of instruction selector 9 to receive a VSID code and a page number from a processor executing a program. Memory access controller 14 receives data from the PN field of instruction register 1 and the V field of general registers 3 and uses them as sought-for items to search directory registers 5 to detect a register 5-i having the same VSID and a bit "1" in the RP field which is stored in a position assigned to the currently executing processor to determine if that processor is granted access. If granted, it proceeds to address the buffer area 4-i which corresponds to directory register 5-i. As shown in Fig. 2, the logical memory address contained in each of 16 address translation pages comprises a logical page field LP and an in-page address field A, the logical page field LP comprising a 3-bit VSID field S and a page identifier field P. The S and P field data are translated to a physical page number PP. Physical page number PP forms part of a physical memory address with the address data of field A. Memory access controller 14 searches all pages using the VSID code and the page number received from address register 15. A corresponding physical page number PP is combined with the associated in-page address A to form a physical address which is returned to memory access controller 14 to read data from main memory 8 for loading into the processor of interest.

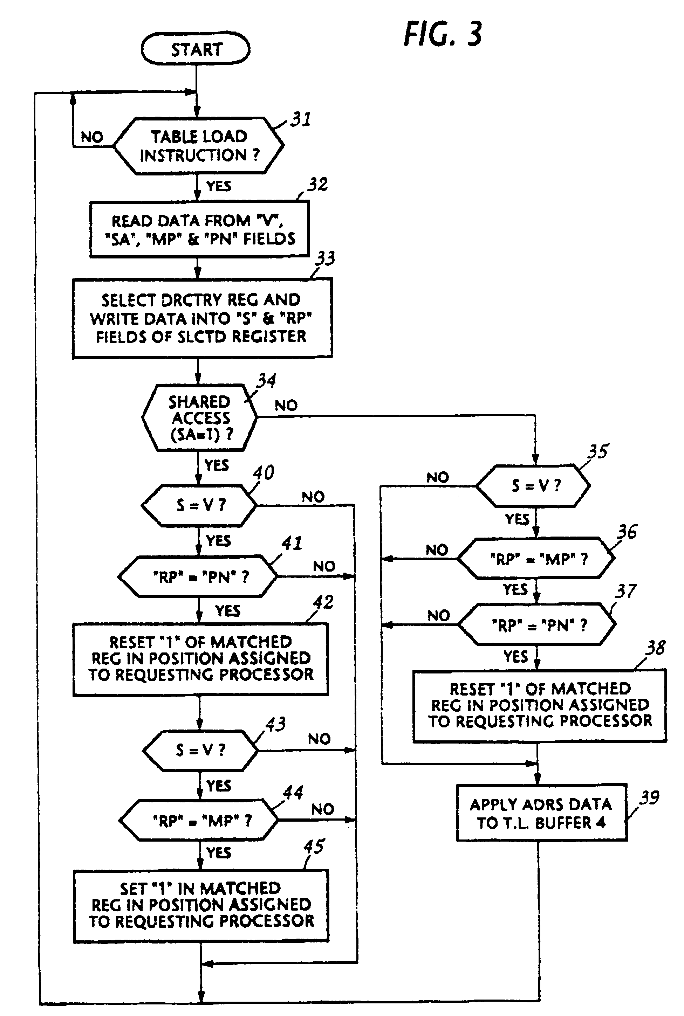

Details of the operation of directory controller 7 are shown in a flowchart of Fig. 3. Directory controller 7 starts with step 31 by checking to see if there is a table load instruction from decoder 2. If there is one, control exits to step 32 to read the contents of the V, SA and MP fields of a general register 3 which is selected according to the R field of instruction register 1 as well as the contents of the PN field of instruction register 1. Exit then is to step 33 which directs the selecting of one of directory registers 5-0∼5-7 and the writing of the read V field data into the S field of the selected directory register and a bit "1" into a bit position of the RP field of the selected directory register that corresponds to the processor from which the table load instruction is issued.

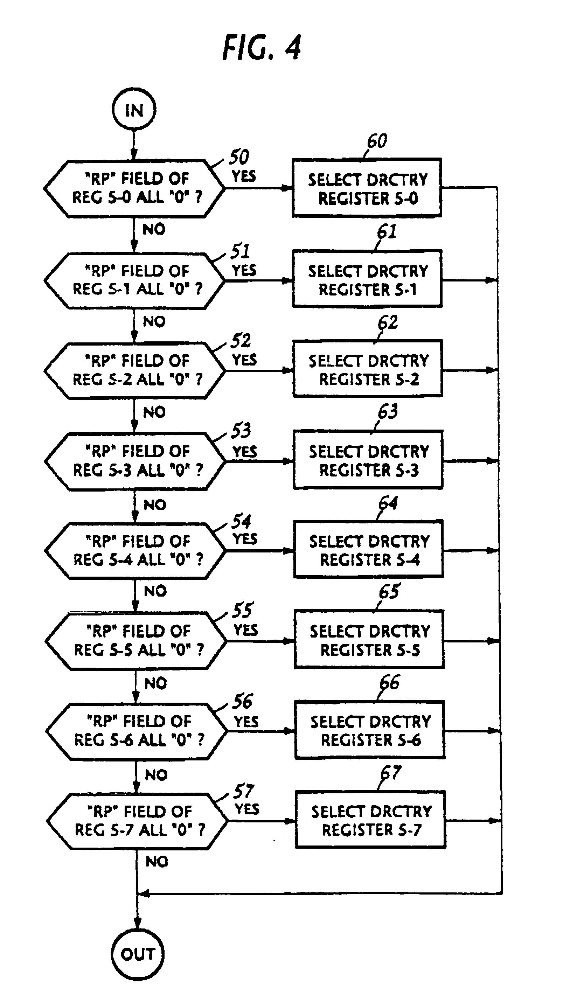

Referring briefly to Fig. 4, the selection of a directory register by step 33 is done by sequentially executing decision steps 50 through 57. In each of these decision steps, control sequentially examines the RP field of directory registers 5-0∼5-7 to determine if it contains all zero's, starting with the directory register having the lowest register number, i.e., register 5-0, and if affirmative decision is made, control exits from one of decision steps 50-57 to a corresponding one of operations steps 60-67. Therefore, if decision in step 50 is negative, exit is to decision step 51, and if affirmative, exit is to step 60 which selects the directory register 5-0. In like manner, if decision in step 51 is negative, control exits to decision step 52, and if affirmative, step 61 is executed by selecting the directory register 5-1, and so forth.

Returning to Fig. 3, control enters step 34 to check to see if SA=1 or SA=0, namely, whether the processor is attempting a shared-access to a common resource or an exclusive access to a given resource. If the answer is negative, control executes decision steps 35 to 37 to make a search through all directory registers 5-0∼5-7 using the data obtained from the V, MP and PN fields as sought-for items. Specifically, in step 35 control checks to see if there is one or more directory registers in which the data in their S field is equal to the contents of the received V field. If the answer is affirmative, control exits to step 36 to detect if the RP field of the matched registers has a bit "1" in a position assigned to a master processor identified by the MP field. If the answer is affirmative, control advances to step 37 to detect if the RP field of the registers which are matched in step 36 still has a bit "1" in a position which corresponds to a requesting processor identified by the PN field. If more than one bit "1" exists in the RP field of a directory register having the same VSID, control advances to step 37 and makes an affirmative decision. Exit then is to step 38 to reset the bit "1" of the only register which remains after the screening process, the position of the bit "1" being assigned to the requesting processor. The resetting of this bit "1" indicates the denial of the right of a slave processor to access the common resource to which it has been allowed access. Details of this resetting operation will be described later.

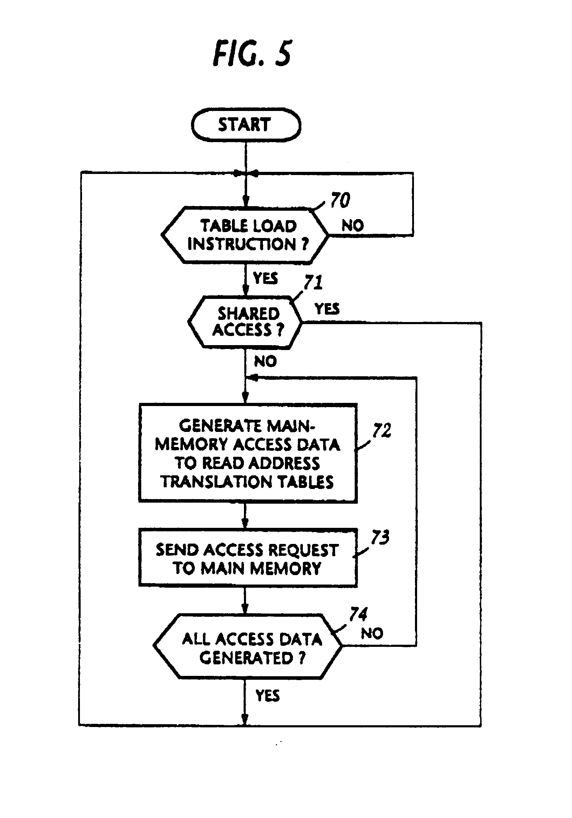

The execution of step 38 or negative decision in any of steps 35, 36 and 37 is followed by step 39 in which control directs the application of address data to translation lookaside buffer 4. Simultaneously, table access controller 6 receives data from a general register 3 and decoder 2 to address a buffer area that corresponds to the directory register which has been selected by step 33 or corresponds to the register whose bit "1" in the RP field has just been reset by step 38. Address translation tables stored in main memory 8 are addressed in a manner described below with reference to Fig. 5.

In Fig. 5, when a table load instruction is received from decoder 2 (step 70), table access controller 6 goes to step 71 to check to see if the content of the SA field from one of registers 3 is "1" or "0". If SA=1, control returns to step 70, otherwise exit is to step 72 to generate main memory access data. Control proceeds to send an access request to main memory 8 (step 73) and checks in step 74 to see if all access data are generated. If not, control returns to step 72 to repeat the process, so that all address data necessary to read 16 pages of a desired memory space are supplied to main memory 8. A copy of accessed pages is then loaded into one of the memory spaces 4-0∼4-7 of buffer 4 which is addressed by the address data supplied from directory controller 7.

If the requesting processor is attempting a shared access, the answer in step 34 will be affirmative, and control moves to step 40 to search all directory registers 5 using the V and PN fields as sought-for items to detect one or more registers whose S field matches the V field. If the answer is affirmative, control moves to step 41 to check to see if the RP field of the matched registers contains a bit "1" in a position which is assigned to the requesting processor identified by the PN field. If the answer is affirmative, there is only one matched register which contains the data associated with the requesting processor, and control exits to step 42 to reset the bit "1" of the matched register in a position assigned to the requesting processor. The resetting of the RP field of this register renders it ineffective.

Following the resetting of the matched register, control makes a second search through all directory registers 5 by executing step 43, using this time the V and MP fields as sought-for items to detect one or more registers whose S field data matches the V field. If the answer is affirmative, control exits to step 44 to check to see if the RP field of the matched registers contains a bit "1" in a position assigned to a master processor identified by the MP field. If the answer is affirmative, there is only one directory register remaining in the screening process and control advances to step 45 to set a bit "1" in a position of the remaining register, the position of the bit "1" being assigned to the requesting (slave) processor. The setting of a bit "1" in the slave processor position indicates the grant of right of a shared-access to a common resource. Negative decision in any of steps 40, 41, 43 or 44 allows control to return to step 31 to repeat the process.

For a full understanding of the present invention, the operation of the system will be given in more detail with reference to rigs. 3 and 6 with the assumption that initially master processor #1 loads a copy of 16 pages of address translation tables into buffer area 4-4 and is executing a program, with the corresponding directory register 5-4 containing "011" in its S field and "0100" in its RP field. Subsequently slave processor #2 attempts a shared-access to that buffer area by selecting directory register 5-2, and following this shared-access mode, processor #2 attempts an exclusive access to that buffer area using directory register 5-6.

When master processor #1 initially placed a table load instruction (nonshared access), control moves through steps 31 and 32 and enters step 33 to select directory register 5-4 in a manner as described above with reference to Fig. 4 and writes "011" into the S field of register 5-4 and "0100" into the RP field of the register as shown in part (a) of Fig. 6. Control enters step 33 to read data from the V=011, SA=0 and MP=01 fields of general register 3-0 which is selected by instruction register 1, for example, as well as data in the PN field of instruction register 1. Leaving step 33, control moves past step 34 and enters step 35. Since there is a match between the V field and the S field of register 5-4, control exits to step 36. Again, the RP field of register 5-4 matches the MP field data, and control exits to step 37. Since PN field data is not present, the answer is negative in step 37 and control exits to step 39 to apply address data to T. L. buffer 4 so that buffer area 4-4 Is addressed and a copy of 16 pages of translation tables is loaded from main memory 8 into the addressed buffer area in a manner as described above with reference to Fig. 5 under control of table access controller 6. Using address translation data stored in translation lookaside buffer 4, master processor #1 is able to execute a program.

When slave processor #2 subsequently issues a table load instruction (shared-access), control moves through steps 31 and 32 and executes step 33 by selecting directory register 5-2 and writing "011" into the S field of register 5-2 and "0010" into the RP field of register 5-2 as shown in part (b) of Fig. 6. Control enters step 33 to read V=011, SA=1 and MP=01 from register 3-2 which is selected by instruction register 1, for example, as well as PN=10 from instruction register 1. Control examines the contents of the SA field of register 3-2 (step 34) and interprets that slave processor #2 is attempting a shared access to a resource identified by V=011. Control now enters step 40 to make a search through the S fields of all directory registers 5 and detects that directory registers 5-2 and 5-4 are having the same contents in their S fields and goes to step 41 to check their RP fields with the PN=10 data so that directory register 5-2 remains in the screening process and in step 42 control resets the bit "1" in bit position #5 of directory register 5-2 and proceeds to step 43. Control again detects registers 5-2 and 5-4 as having the same S field data, and goes to step 43 to check their RP fields with MP=01 so that register 5-4 remains in the screening process. Control moves to step 45 to set a bit "1" in position #5 of directory register 5-4 (part (c) of Fig. 6). As a result, processors #1 and #2 are therefore granted a shared-access to a resource identified by the segmented virtual space identifier "011" and the contents of directory registers 5-2 and 5-4 appear as shown in part (d) of Fig. 6 when both processors are executing programs.

At the end of the shared-access mode, slave processor #2 issues an exclusive-access table load instruction to instruction register 1 in order to execute a program in an exclusive access mode by loading V=011, SA=0 and MP=01 into general register 3-1. Control moves through steps 31 through 33 to read data from register 3-1 and selects directory register 5-6, for example, and write S=011 and RP=0010 into the selected directory register 5-6 as shown in part (e) of Fig. 6. Negative decision issues in step 34 and control enters step 35. Using V=011, PN=10, MP=01, control searches all directory registers, so that registers 5-4 and 5-6 are detected as having the same S field and proceeds to step 36 to check their RP field with MP=01. Since register 5-4 has a bit "1" in position #4 (master processor position), a match is detected, and control goes to step 37. This time it ascertains that register 5-4 has a bit "1" in position #4. Since there is one, control moves ahead to step 38 to reset the bit "1" in the #5 position which is assigned to requesting processor #2 (see part (f) of Fig. 6). Step 39 is then executed to apply address data to buffer 4, allowing table access controller 6 to load a copy of 16 tables into buffer area 4-4 (part (g) of Fig. 6). The status of registers 5-4 and 5-6 indicates that processors #1 and #2 are allowed to individually access to the resource identified by segmented virtual space identifier "011".

Since only one translation lookaside buffer is required for the multiprocessing system of the present invention, the hardware cost can be kept to a minimum. In addition, the directory registers 5 are so configured that the identifiers of processors sharing a common resource are registered in the form of a bit "1" in a processor-assigned position of a directory register corresponding to the buffer area in which a copy of pages is loaded. This configuration substantially reduces the processor overhead which would otherwise occur when loading address translation tables. This in turn allows the single translation lookaside buffer to be efficiently utilized by the processors.

## Claims

1. A multiprocessing system having a plurality of processors (10-13), one of which is a master processor, and a main memory (8) connected to said plurality of processors, said main memory (8) having a plurality of paged address translation tables each describing a relationship between a logical address and a physical address, comprising:
means (1, 2, 3-0 to 3-7, 9, 15) for receiving an instruction from a requesting processor, said instruction comprising a segmented virtual space identifier (VSID), and a shared-access identifier or a nonshared-access identifier;
a translation lookaside buffer (4) partitioned into a plurality of buffer areas (4-0 to 4-7);
a plurality of registers (5-0 to 5-7) respectively corresponding to said buffer areas (4-0 to 4-7), each of said registers (5-0 to 5-7) having a first field (5) and a second field (RP), said second field (RP) having bit positions respectively assigned to said plurality of processors (10-13);
means (7) responsive to said instruction received by said receiving means (1, 2, 3-0 to 3-7, 9, 15) comprising a nonshared-access identifier, for selecting one of said registers (5-0 to 5-7), said second field (RP) of the selected register having all vacant bit positions, and writing said segmented virtual space identifier (VSID) into the first field (5) of said selected register and setting a bit in a bit position of said selected register assigned to said requesting processor; making a search through said registers (5-0 to 5-7) and detecting a register having said segmented virtual space identifier (VSID) and first and second bits in positions respectively assigned to said master and requesting processors, and for resetting said second bit and, responsive to said instruction received by said receiving means comprising a shared-access identifier, for making a search through said registers (5-0 to 5-7) for detecting a first register having said segmented virtual space identifier (VSID) and a bit in a position assigned to said master processor, setting a bit in a position of said first register assigned to said requesting processor and detecting a second register having said segmented virtual space identifier (VSID) and a bit in a position assigned to said requesting processor; and for resetting said bit of said second register; and
table access control means (6), responsive to said nonshared-access identifier, for loading a copy of said paged address translation tables from said main memory (8) into a buffer area corresponding to said register having said segmented virtual space identifier (VSID) and a single bit in the second field thereof, said single bit being set in a position assigned to said requesting processor.

2. A multiprocessing system as claimed in claim 1 further comprising memory access control means (14) for accessing said main memory (8) in accordance with a physical address contained in a buffer area corresponding to a register having said segmented virtual space identifier (VSID) and a bit in a position assigned to said requesting processor.

3. A method for operating a multiprocessing system having a plurality of processors (10-13), one of which is a master processor, a main memory (8) connected to said plurality of processors (10-13), said main memory (8) having a plurality of paged address translation tables each describing a relationship between a logical address and a physical address, a single translation lookaside buffer (4) partitioned into a plurality of buffer areas (4-0 to 4-7), a plurality of registers (5-0 to 5-7) respectively corresponding to said buffer areas (4-0 to 4-7), each of said registers (5-0 to 5-7) having a first field (5) and a second field (RP), said second field (RP) having bit positions respectively assigned to said plurality of processors (10-13), comprising the steps of:
a) receiving from a requesting processor an instruction comprising a segmented virtual space identifier (VSID) and a shared-access identifier or a nonshared-access identifier;
b) if said instruction comprises a nonshared-access identifier
(1) selecting a register whose second field (RP) comprises all vacant bit positions and writting said segmented virtual space identifier (VSID) into the first field (5) of the selected register and a bit in one of the vacant bit positions which is assigned to said requesting processor;
(2) loading a copy of said paged translation tables from said main memory into a buffer area corresponding to a register having said segmented virtual space identifier (VSID) and a single bit in the second field thereof, said single bit being set in a position assigned to said requesting processor; and dectecting a register having said segmented virtual space identifier (VSID) and first and second bits in positions assigned respectively to said master processor and said requesting processor, and resetting said second bit
c) if said instruction comprises a shared-access identifier, detecting first and second registers, said first register having said segmented virtual space identifier (VSID) and a bit in a position assigned to said master processor and said second register having said segmented virtual space identifier (VSID) and a bit in a position assigned to said requesting processor, setting a bit in a position of said first register assigned to said requesting processor, and resetting said bit of said second register.

4. A method as claimed in claim 3, further comprising the step of:
d) accessing said main memory (8) according to a physical address contained in a buffer area corresponding to a register comprising said segmented virtual space identifier (VSID) and a bit in a position assigned to said requesting processor.

## Patentansprüche

1. Mehrprozessorsystem mit mehreren Prozessoren (10-13), von denen einer ein Hauptprozessor ist, und einem mit den mehreren Prozessoren verbundenen Hauptspeicher (8), wobei der Hauptspeicher (8) mehrere seitenbezogen formatierte Adressenumsetzungstabellen aufweist, durch die eine Beziehung zwischen einer logischen Adresse und einer physikalischen Adresse beschrieben wird, mit:
einer Einrichtung (1, 2, 3-0 bis 3-7, 9, 15) zum Empfangen eines Befehls von einem anfordernden Prozessor, wobei der Befehl eine Identifizierung (VSID) für einen segmentierten virtuellen Bereich und eine Identifizierung für einen gemeinsamen Zugriff oder eine Identifizierung für einen nicht gemeinsamen Zugriff aufweist;
einem in mehrere Pufferbereiche (4-0 bis 4-7) aufgeteilten Übersetzungspuffer;
mehreren den Pufferbereichen (4-0 bis 4-7) zugeordneten Registern (5-0 bis 5-7), wobei jedes der Register (5-0 bis 5-7) ein erstes Feld (S) und ein zweites Feld (RP) aufweist, wobei das zweite Feld (RP) den mehreren Prozessoren (10-13) zugeordnete Bitpositionen aufweist;
einer Einrichtung (7), die auf den durch die Empfangseinrichtung (1, 2, 3-0 bis 3-7, 9, 15) empfangenen Befehl anspricht, der eine Identifizierung für einen nicht gemeinsamen Zugriff aufweist, um eines der Register (5-0 bis 5-7) auszuwählen, wobei die Bitpositionen des zweiten Feldes (RP) des ausgewählten Registers alle unbesetzt sind, die Identifizierung (VSID) für einen segmentierten virtuellen Bereich in das erste Feld (S) des ausgewählten Registers zu schreiben und ein Bit in einer Bitposition des ausgewählten Registers zu setzen, die dem anfordernden Prozessor zugewiesen ist, die Register (5-0 bis 5-7) zu durchsuchen und ein Register zu erfassen, das die Identifizierung (VSID) für einen segmentierten virtuellen Bereich und ein erstes und ein zweites Bit in Positionen aufweist, die dem Haupt- bzw. den anfordernden Prozessoren zugewiesen sind, und das zweite Bit zurückzusetzen, und auf den durch die Empfangseinrichtung empfangenen Befehl anspricht, der eine Identifizierung für einen gemeinsamen Zugriff aufweist, um die Register (5-0 bis 5-7) zu durchsuchen, um ein erstes Register zu erfassen, das die Identifizierung (VSID) für einen segmentierten virtuellen Bereich und ein Bit in einer dem Hauptprozessor zugewiesenen Position aufweist, ein Bit in einer dem anfordernden Prozessor zugewiesenen Position des ersten Registers zu setzen und ein zweites Register, das die Identifizierung (VSID) für einen segmentierten virtuellen Bereich und ein Bit in einer dem anfordernden Prozessor zugewiesenen Position aufweist zu erfassen und das Bit des zweiten Registers zurückzusetzen; und einer auf die Identifizierung für einen nicht gemeinsamen Zugriff ansprechenden Tabellenzugriffsteuerungseinrichtung (6) zum Laden einer Kopie der seitenbezogen formatierten Adressenumsetzungstabellen vom Hauptspeicher (8) in einen Pufferbereich, der dem Register entspricht, das die Identifizierung (VSID) für einen segmentierten virtuellen Bereich und ein einzelnes Bit in seinem zweiten Feld aufweist, wobei das einzelne Bit in einer dem anfordernden Prozessor zugewiesenen Position gesetzt ist.

2. Mehrprozessorsystem nach Anspruch 1, ferner mit einer Speicherzugriffsteuerungseinrichtung (14) zum Zugreifen auf den Hauptspeicher (8) gemäß einer physikalischen Adresse, die in einem Pufferbereich angeordnet ist, der einem Register zugeordnet ist, das die Identifizierung (VSID) für einen segmentierten virtuellen Bereich und ein Bit in einer dem anfordernden Prozessor zugewiesenen Position aufweist.

3. Verfahren zum Betreiben eines Mehrprozessorsystems mit mehreren Prozessoren (10-13), von denen einer ein Hauptprozessor ist, einem mit den mehreren Prozessoren (10-13) verbundenen Hauptspeicher (8), wobei der Hauptspeicher (8) mehrere seitenbezogen formatierte Adressenumsetzungstabellen aufweist, die jeweils eine Beziehung zwischen einer logischen Adresse und einer physikalischen Adresse beschreiben, einem einzelnen Übersetzungspuffer (4), der in mehrere Pufferbereiche (4-0 bis 4-7) aufgeteilt ist, mehreren den Pufferbereichen (4-0 bis 4-7) zugeordneten Registern (5-0 bis 5-7), wobei jedes der Register (5-0 bis 5-7) ein erstes Feld (S) und ein zweites Feld (RP) aufweist, wobei das zweite Feld (RP) den mehreren Prozessoren (10-13) zugeordnete Bitpositionen aufweist, mit den Schritten:
a) Empfangen eines Befehls von einem anfordernden Prozessor, wobei der Befehl eine Identifizierung (VSID) für einen segmentierten virtuellen Bereich und eine Identifizierung für einen gemeinsamen Zugriff oder eine Identifizierung für einen nicht gemeinsamen Zugriff aufweist;
b) wenn der Befehl eine Identifizierung für einen nicht gemeinsamen Zugriff aufweist:
(1) Auswählen eines Registers, dessen Bitpositionen des zweiten Feldes (RP) alle unbesetzt sind, und Schreiben der Identifizierung (VSID) für einen segmentierten virtuellen Bereich in das erste Feld (S) des ausgewählten Registers und eines Bits in eine der unbesetzten Bitpositionen, die dem anfordernden Prozessor zugewiesen ist;
(2) Laden einer Kopie der seitenbezogen formatierten Umsetzungstabellen vom Hauptspeicher in einen Pufferbereich, der einem Register entspricht, der die Identifizierung (VSID) für einen segmentierten virtuellen Bereich und ein einzelnes Bit in seinem zweiten Feld aufweist, wobei das einzelne Bit in einer dem anfordernden Prozessor zugewiesenen Position gesetzt ist; und
3) Erfassen eines Registers, das die Identifizierung (VSID) für einen segmentierten virtuellen Bereich und ein erstes und ein zweites Bit in dem Hauptprozessor bzw. dem anfordernden Prozessor zugewiesenen Positionen aufweist, und Zurücksetzen des zweiten Bits;
c) wenn der Befehl eine Identifizierung für einen gemeinsamen Zugriff aufweist:
Erfassen eines ersten und eines zweiten Registers, wobei das erste Register die Identifizierung (VSID) für einen segmentierten virtuellen Bereich und ein Bit in einer dem Hauptprozessor zugewiesenen Position aufweist und das zweite Register die Identifizierung (VSID) für einen segmentierten virtuellen Bereich und ein Bit in einer dem anfordernden Prozessor zugewiesenen Position aufweist;
Setzen eines Bits in einer dem anfordernden Prozessor zugewiesenen Position des ersten Registers und Zurücksetzen des Bits des zweiten Registers.

4. Verfahren nach Anspruch 3, ferner mit dem Schritt:
d) Zugreifen auf den Hauptspeicher (8) gemäß einer physikalischen Adresse, die in einem Pufferbereich enthalten ist, der einem Register zugeordnet ist, das die Identifizierung (VSID) für einen segmentierten virtuellen Bereich und ein Bit in einer dem anfordernden Prozessor zugewiesenen Position aufweist.

## Revendications

1. Système de multitraitement ayant une pluralité de processeurs (10-13), dont l'un est un processeur central, et une mémoire principale (8) connectée à ladite pluralité de processeurs, ladite mémoire principale (8) ayant une pluralité de tables de pages de conversion d'adresses décrivant chacune une relation entre une adresse logique et une adresse physique, comprenant :
des moyens (1, 2, 3-0 à 3-7, 9, 15) destinés à recevoir une instruction provenant d'un processeur interrogateur, ladite instruction comportant un identificateur d'espace virtuel segmenté (VISD) et un identificateur d'accès partagé ou un identificateur d'accès non partagé ;
une mémoire tampon de conversion (4) divisée en une pluralité de zones tampons (4-0 à 4-7) ;
une pluralité de registres (5-0 à 5-7) correspondant respectivement auxdites zones tampons (4-0 à 4-7), chacun desdits registres (5-0 à 5-7) ayant une première zone (S) et une seconde zone (RP), ladite seconde zone (RP) ayant des positions de bits assignées respectivement à ladite pluralité de processeurs (10-13);
des moyens (7) sensibles à ladite instruction reçue par lesdits moyens récepteurs (1, 2, 3-0 à 3-7, 9, 15) comprenant un identificateur d'accès non partagé, destinés à sélectionner l'un desdits registres (5-0 à 5-7), ladite seconde zone (RP) du registre sélectionné ayant toutes les positions de bits vacantes, et à écrire ledit identificateur d'espace virtuel segmenté (VISD) dans la première zone (S) dudit registre sélectionné et à fixer un bit dans une position de bit dudit registre sélectionné assignée audit processeur interrogateur ; à effectuer une recherche à travers lesdits registres (5-0 à 5-7) et à détecter un registre ayant ledit identificateur d'espace virtuel segmenté (VISD) et des premier et second bits dans des positions respectivement assignées auxdits processeurs central et interrogateur, et a refixer ledit second bit, et sensibles à ladite instruction reçue par lesdits moyens récepteurs comprenant un identificateur d'accès partagé afin d'effectuer une recherche à travers lesdits registres (5-0 à 5-7) pour détecter un premier registre ayant ledit identificateur d'espace virtuel segmenté (VISD) et un bit dans une position assignée audit processeur central, pour fixer un bit dans une position dudit premier registre assignée audit processeur interrogateur, et pour détecter un second registre ayant ledit identificateur d'espace virtuel segmenté (VISD) et un bit dans une position assignée audit processeur interrogateur ; et pour refixer ledit bit dudit second registre ; et
des moyens de commande d'accès aux tables (6) sensibles audit identificateur d'accès non partagé, destinés à charger une copie desdites tables de pages de conversion d'adresses à partir de ladite mémoire principale (8) dans une zone tampon correspondant audit registre ayant ledit identificateur d'espace virtuel segmenté (VISD) et un bit unique dans sa seconde zone, ledit bit unique étant fixé dans une position assignée audit processeur interrogateur.

2. Système de multitraitement selon la revendication 1, comprenant, en outre, des moyens de commande d'accès (14) à la mémoire destinés à accéder à ladite mémoire principale (8) conformément à une adresse physique contenue dans une zone tampon correspondant à un registre ayant ledit identificateur d'espace virtuel segmenté (VISD) et un bit dans une position assignée audit processeur interrogateur.

3. Procédé de mise en oeuvre d'un système de multitraitement ayant une pluralité de processeurs (10-13), dont l'un est un processeur central, et une mémoire principale (8) connectée à ladite pluralité de processeurs (10-13), ladite mémoire principale (8) ayant une pluralité de tables de pages de conversion d'adresses décrivant chacune une relation entre une adresse logique et une adresse physique, une mémoire tampon unique de conversion (4) divisée en une pluralité de zones tampons (4-0 à 4-7), une pluralité de registres (5-0 à 5-7) correspondant respectivement auxdites zones tampons (4-0 à 4-7), chacun desdits registres (5-0 à 5-7) ayant une première zone (S) et une seconde zone (RP), ladite seconde zone (RP) ayant des positions de bits assignées respectivement à ladite pluralité de processeurs (10-13), comprenant les étapes consistant:
a) à recevoir, en provenance d'un processeur interrogateur, une instruction comportant un identificateur d'espace virtuel segmenté (VISD) et un identificateur d'accès partagé ou un identificateur d'accès non partagé
b) si ladite instruction comporte un identificateur d'accès non partagé
(1) à sélectionner un registre dont la seconde zone (RP) a toutes les positions de bits vacantes et à écrire ledit identificateur d'espace virtuel segmenté (VISD) dans la première zone (S) du registre sélectionné et un bit dans l'une des positions de bits vacantes qui est assignée audit processeur interrogateur ;
(2) à charger une copie desdites tables de pages de conversion à partir de ladite mémoire principale dans une zone tampon correspondant à un registre ayant ledit identificateur d'espace virtuel segmenté (VISD) et un bit unique dans sa seconde zone, ledit bit unique étant fixé dans une position assignée audit processeur interrogateur ; et
(3) à détecter un registre ayant ledit identificateur d'espace virtuel segmenté (VISD) et des premier et second bits dans des positions respectivement assignées audit processeur central et audit processeur interrogateur, et à refixer ledit second bit
c) si ladite instruction comporte un identificateur d'accès partagé, à détecter des premier et second registres, ledit premier registre ayant ledit identificateur d'espace virtuel segmenté (VISD) et un bit dans une position assignée audit processeur central, et ledit second registre ayant ledit identificateur d'espace virtuel segmenté (VISD) et un bit dans une position assignée audit processeur interrogateur, et à fixer un bit dans une position dudit premier registre assignée audit processeur interrogateur, et à refixer ledit bit dudit second registre.

4. Procédé selon la revendication 3, comprenant, en outre, l'étape consistant :
d) à accèder à ladite mémoire principale (8) conformément à une adresse physique contenue dans une zone tampon correspondant à un registre comprenant ledit identificateur d'espace virtuel segmenté (VISD) et un bit dans une position assignée audit processeur interrogateur.
